# EUROPEAN PATENT APPLICATION

(11) **EP 4 804 141 A1**
(43) Date of publication of application: **09.09.2026**
(21) Application number: 25161940.9
(22) Date of filing: 05.03.2025
(51) Int. Cl.: G06V 10/82, G06V 20/69

(54) **DETERMINATION OF A MONOLAYER CANDIDATE POSITION**

(71) Applicant: CellaVision AB, 223 62 Lund (SE)
(72) Inventor: Bram, Robin, 217 55 Malmö (SE); Larsson, Viktor, 224 57 Lund (SE); Nauclér, Gustav, 224 58 Lund (SE); Almers, Martin, 226 51 Lund (SE)
(74) Representative: AWA Sweden AB

(57) **Abstract**

The present inventive concept relates to a method for training a machine learning model to determine a monolayer candidate position in a sample. The method comprising: acquiring a training set of images of a training sample, wherein images of the training set depict a respective portion of the training sample; for each image of the training set: acquiring a number of reference red blood cells depicted in at least a part of the image, and determining a monolayer parameter for the portion of the training sample depicted in the image based on the acquired number of reference red blood cells; acquiring a position of the portion depicted in the image of the training set having a monolayer parameter fulfilling a monolayer candidate criterium; and training the machine learning model to determine a monolayer candidate position in a sample using a training input comprising the training set of images and a ground truth comprising the acquired position.

## Description

### Technical field

The present inventive concept relates to determination of a monolayer candidate position in a sample.

### Background of the invention

Analysis of blood smears is a laboratory technique used to examine characteristics of blood cells present in the blood smear. This process typically involves spreading a drop of blood thinly onto a microscope slide, staining it to highlight different cell types, and then analyzing it under a microscope. Such analysis provides valuable information about, e.g., a number, size, shape, and maturity of red blood cells, white blood cells, and platelets present in the blood smear. It is commonly used to diagnose and monitor various conditions, such as infections, anemia, and blood disorders like leukemia, to name a few. By identifying abnormalities in blood cells, healthcare personnel can make informed decisions about diagnosis and treatment. An important step in this process is finding a monolayer, i.e., a region in the blood smear where the blood cells are spread out in a single layer. This is important because it allows for clear and accurate observation of individual cells without overlapping, which can obscure details and lead to an incorrect or incomplete analysis. Further, in the monolayer, a distribution of white blood cells is typically representative, whereas it can be skewed in other areas of the blood smear. However, finding monolayers in blood smears is typically a tedious and challenging task. For instance, it typically requires high-resolution imaging and subsequent analysis of large portions of the blood smear to determine whether an imaged portion indeed is a monolayer. Thus, there exist a need for improvements within the art.

### Summary of the invention

In view of the above, it is an object of the present inventive concept to provide a trained machine learning model capable of determining candidate positions for a monolayer in a sample. A further object is to, at least partly, mitigate, alleviate or eliminate one or more of the above-identified deficiencies in the art and disadvantages singly or in any combination and solve at least the above-mentioned problem.

According to a first aspect, a method for training a machine learning model to determine a monolayer candidate position in a sample is provided. The method of the first aspect comprises: acquiring a training set of images of a training sample, wherein images of the training set depict a respective portion of the training sample; for each image of the training set: acquiring a number of reference red blood cells depicted in at least a part of the image, and determining a monolayer parameter for the portion of the training sample depicted in the image based on the acquired number of reference red blood cells; acquiring a position of the portion depicted in the image of the training set having a monolayer parameter fulfilling a monolayer candidate criterium; and training the machine learning model to determine a monolayer candidate position in a sample using a training input comprising the training set of images and a ground truth comprising the acquired position. The wording "training" as in "training sample" is herein used to refer to a sample used during training, as opposed to a general sample which the machine learning model is trained to determine a monolayer candidate position in. The machine learning model may of course be able to determine a monolayer candidate position in an image depicting the training sample. However, the machine learning model may also be able to determine monolayer candidate positions in images of other samples as well, which may not be part of the training set of images. Put differently, the machine learning model may, after training, be able to determine a monolayer candidate positions in images of samples not used for training the machine learning model. Thus, the machine learning model is trained (using training sample(s)) to determine a monolayer candidate positions in images of any sample. The wording "the sample" may be used herein to refer to either the samples used during training or during inference (i.e., the samples of which captured images may be input into a trained machine learning model), depending on the context. The sample and/or the training sample may be a blood smear. Within the context of this disclosure, "reference red blood cells" should be understood as red blood cells fulfilling one or more criteria that are indicative of how suitable red blood cells are as indicators of a monolayer in the sample. Within the context of this disclosure, a "monolayer parameter" should be understood as a parameter indicating to what degree the portion of the sample at the monolayer candidate position exhibits properties associated with a monolayer. For instance, the monolayer parameter may indicate to what degree the reference red blood cells in the portion of the sample are spread out in a single layer. By means of the present inventive concept, a machine learning model capable of finding a position of a monolayer in a sample is allowed. In particular, the trained machine learning model can be used to more quickly and/or efficiently identify a monolayer position in the sample.

The method of the first aspect may further comprise: for each image of the training set: acquiring a size of the part of the image for which the number of reference cells is acquired. Determining the monolayer parameter for the portion of the training sample depicted in the image may be further based on the acquired size of the part of the image for which the number of reference cells is acquired. For instance, the monolayer parameter may be indicative of a density of reference cells in the part of the image for which the number of reference cells is acquired. Accordingly, by taking the density of reference cells into account, the monolayer parameter may, more or less, be independent of the size of the part of the image for which the number of reference cells is acquired. A more versatile machine learning model may therefore be allowed.

Each red blood cell of the reference red blood cells may have an areal overlap with neighboring objects of 10 % or lower, preferably 5 % or lower, more preferably 0 %. The neighboring objects may be one or more of red blood cells, white blood cells, and platelets. It is further to be understood that the neighboring objects may comprise damaged cells (i.e., smudge cells) and/or other artifacts such as foreign objects (dirt, etc.) or residues (e.g., from a staining agent). For example, 10 % or less of an area of each red blood cell of the reference red blood cells may overlap with neighboring red blood cells. Preferably, 5 % or less of an area of each red blood cell of the reference red blood cells may overlap with neighboring red blood cells. More preferably, 0 % of an area of each red blood cell of the reference red blood cells may overlap with neighboring red blood cells. Accordingly, the reference blood cells may be red blood cells that to only a small degree (or not at all) are overlapped by neighboring objects (e.g., other red blood cells in the sample). Such characteristics may be indicative of a monolayer in the sample.

Each red blood cell of the reference red blood cells may have a central pallor. Within the context of this disclosure, "central pallor" should be understood as a lighter-colored portion in a center of a red blood cell which is visible when viewed by an imaging apparatus (e.g., a microscope). A red blood cell may have a central pallor due to its shape. Put differently, the red blood cell may have a thinner central region, which may be visible as a more lightly colored than neighboring portions of that red blood cell. Accordingly, the reference blood cells may be indicative of a monolayer in the sample. Red blood cells having no central pallor may be indicative of a portion of the sample which is too thin and/or too thick. Thus, red blood cells having no central pallor may not be indicative of a monolayer in the sample.

The central pallor may occupy at least 5 % of the red blood cell. Put differently, a central pallor may occupy at least 5 % of an area of a reference red blood cell. The central pallor may occupy 95 % or less of the red blood cell. Put differently, a central pallor may occupy 95 % or less of an area of a reference red blood cell.

The method of the first aspect may further comprise: acquiring an overview image of the training sample. The overview image may depict at least two portions depicted in at least two respective images of the training set. The training input may further comprise the overview image. Preferably, the overview image of the training sample may depict a majority, or even all, portions depicted in the images of the training set. Accordingly, the machine learning model may be trained on additional information of the sample. It has been found that training the machine learning model further using an overview image greatly improves the trained machine learning model's capability to determine a monolayer candidate position. This may, e.g., be due to the overview image providing information associated with more than one portion of the sample, whereby the machine learning model may be trained taking that information into account.

The ground truth may further comprise the monolayer parameter for the portion depicted in the image of the training set having a monolayer parameter fulfilling a monolayer candidate criterium. The machine learning model may be further trained to determine a monolayer parameter for a portion of the sample at the monolayer candidate position in the sample. Accordingly, the trained machine learning model may thereby be capable of generating a monolayer parameter which, in turn, may be used to evaluate to what degree the portion of the sample at the monolayer candidate position exhibits features associated with a monolayer.

According to a second aspect, a method for determining a monolayer candidate position in a sample using a machine learning model trained according to the first aspect is provided. The method of the second aspect comprises: a. acquiring an image of a portion of the sample at an imaging position in the sample; and b. determining a monolayer candidate position by: inputting the image into the trained machine learning model, and receiving the monolayer candidate position from the trained machine learning model. In case the machine learning model has been trained using an overview image of the training sample, the method according to the second aspect may further comprise: prior to b: acquiring an overview image of the sample, and determining a monolayer candidate position in a sample may further comprise inputting the overview image into the trained machine learning model. Accordingly, finding a candidate position of a monolayer in a sample is provided. This may, in turn, allow for finding a position of a monolayer in the sample.

The method according to the second aspect may further comprise: c. updating the imaging position to the monolayer candidate position. Steps a, b, and c may be repeated until a stop condition is fulfilled. Accordingly, a position of a monolayer in the sample may be found.

The stop condition may be one or more of: a monolayer parameter of the portion of the sample at the imaging position exceeding a monolayer parameter threshold; and a difference between two consecutively determined monolayer candidate positions being smaller than a monolayer candidate position threshold.

The above-mentioned features of the first aspect, when applicable, apply to this second aspect as well. In order to avoid undue repetition, reference is made to the above.

According to a third aspect, a device for training a machine learning model to determine a monolayer candidate position in a sample is provided. The device comprises circuitry configured to execute: a training set acquisition function configured to acquire a training set of images of a training sample, wherein images of the training set depict a respective portion of the training sample; for each image of the training set: a reference red blood cell number acquisition function configured to acquire a number of reference red blood cells depicted in at least a part of the image, and a monolayer parameter determination function configured to determine a monolayer parameter for the portion of the training sample depicted in the image based on the acquired number of reference red blood cells; a position acquisition function configured to acquire a position of the portion depicted in the image of the training set having a monolayer parameter fulfilling a monolayer candidate criterium; and a training function configured to train the machine learning model to determine a monolayer candidate position in a sample using a training input comprising the training set of images and a ground truth comprising the acquired position.

The above-mentioned features of the first aspect and/or the second aspect, when applicable, apply to this third aspect as well. In order to avoid undue repetition, reference is made to the above.

According to a fourth aspect, a microscopy system is provided. The microscopy system comprises: an image sensor; a microscope objective configured to image a sample onto the image sensor; and circuitry configured to execute: an image acquisition function configured to acquire, using the image sensor, an image of a portion of the sample at an imaging position in the sample; and a monolayer candidate position determination function configured to determine a monolayer candidate position by: inputting the image into a machine learning model trained according to the first aspect, and receiving the monolayer candidate position from the trained machine learning model.

The microscopy system may further comprise: a sample holder configured to hold the sample. The sample holder may be movable in a plane having a normal parallel to an optical axis of the microscope objective. The circuitry may be further configured to execute: an imaging position update function configured to update, using the sample holder, the imaging position to the monolayer candidate position. The circuitry may be further configured to repeatedly execute the image acquisition function, the monolayer candidate position determination function, and the image position update function until a stop condition is fulfilled.

The stop condition may be one or more of: a monolayer parameter of the portion of the sample at the imaging position exceeding a monolayer parameter threshold; and a difference between two consecutively determined monolayer candidate positions being smaller than a monolayer candidate position threshold.

The above-mentioned features of the first aspect, the second aspect, and/or the third aspect, when applicable, apply to this fourth aspect as well. In order to avoid undue repetition, reference is made to the above.

According to a fifth aspect, a non-transitory computer-readable storage medium is provided. The non-transitory computer-readable storage medium comprises program code portions that, when executed by a device having processing capabilities, performs the method according to the first aspect and/or the second aspect.

The above-mentioned features of the first aspect, the second aspect, the third aspect, and/or the fourth aspect, when applicable, apply to this fifth aspect as well. In order to avoid undue repetition, reference is made to the above.

Further features of, and advantages with, the present inventive concept will become apparent when studying the appended claims and the following description. The skilled person will realize that different features of the present inventive concept may be combined to create variants other than those described in the following, without departing from the scope of the present inventive concept.

### Brief description of the drawings

The aspects of the present inventive concept, including its particular features and advantages, will be readily understood from the following detailed description and the accompanying drawings, in which:
Figure 1 is a block scheme of a method for training a machine learning model to determine a monolayer candidate position in a sample.
Figure 2 is a schematic illustration of a sample or training sample.
Figure 3 is a block scheme of a method for determining a monolayer candidate position in a sample using a trained machine learning model.
Figure 4 is a schematic illustration of a microscopy system.
Figure 5 is a schematic illustration of a device for training a machine learning model to determine a monolayer candidate position in a sample.
Figure 6 is a schematic illustration of a non-transitory computer-readable storage medium.
Figure 7A is a schematic illustration of red blood cells present in a body of a blood smear.
Figure 7B is a schematic illustration of red blood cells present in a feathered edge of a blood smear.
Figure 7C is a schematic illustration of red blood cells present in a monolayer of a blood smear.

### Detailed description

The present inventive concept will now be described more fully hereinafter with reference to the accompanying drawings, in which currently preferred variants of the inventive concept are shown and discussed. This inventive concept may, however, be implemented in many different forms and should not be construed as limited to the variants set forth herein; rather, these variants are provided for thoroughness and completeness, and fully convey the scope of the present inventive concept to the skilled person. As illustrated in the figures, features may be exaggerated for illustrative purposes and, thus, may be provided to illustrate the general structures of variants of the present inventive concept. Like reference numerals refer to like elements throughout the description.

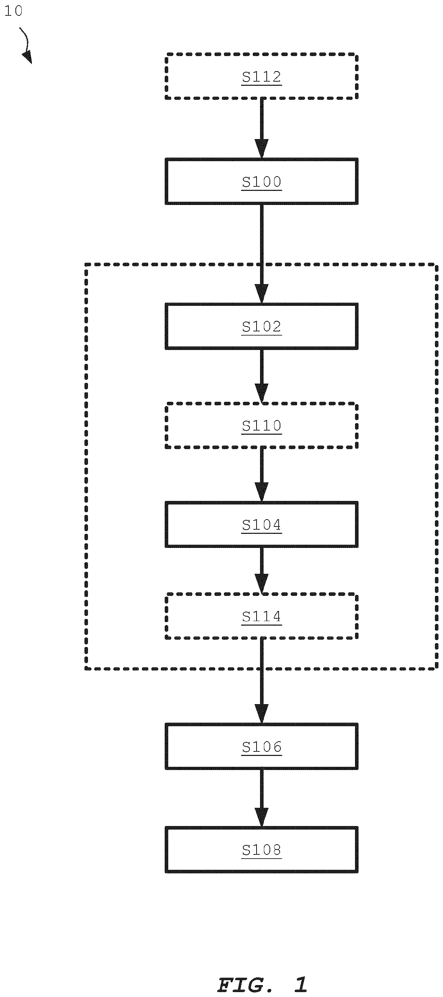

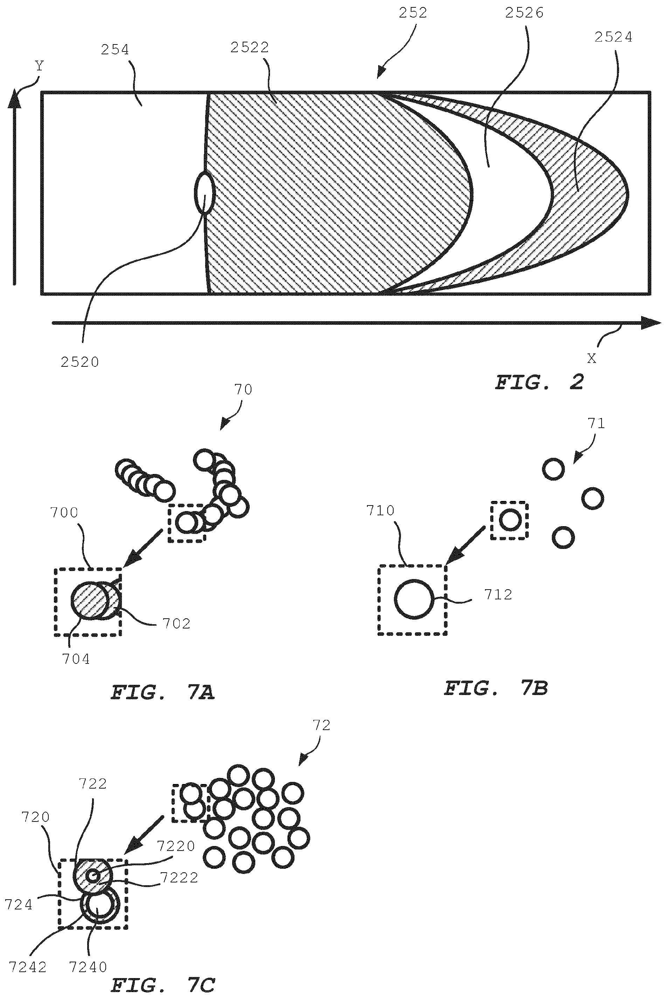

A method for training a machine learning model to determine a monolayer candidate position in a sample will now be described with reference to Fig. 1 and Fig. 2. Figure 2 is a schematic illustration of a training sample (or a sample). As is seen in the example of Fig. 2, the training sample may be prepared on a microscope slide 254. The sample may be a blood smear. A blood smear is typically prepared by placing a drop of blood 2520 near one end of a microscope slide 254, and using a spreader slide (not illustrated) to disperse the blood over the microscope slide's 254 length. Thus, the blood smear may be dispersed along a direction substantially parallel to a longitudinal direction X of the microscope slide 254. The blood smear may also be dispersed along a transverse direction Y of the microscope slide 254. The aim is to get a region, called a monolayer, where the cells are spaced far enough apart to be counted and differentiated. As will be understood from the following description, a monolayer position in a sample should be understood as a position in the sample at which cells (e.g., red blood cells) in the sample are substantially arranged in a single layer (i.e., a monolayer). A monolayer candidate position should be understood as a position in the sample that, according to a machine learning model trained according to the present inventive concept, exhibits one or more properties associated with a monolayer in the sample. As is seen in the example of Fig. 2, the sample 252 may comprise different segments 2522, 2524, 2526. A first segment 2522 may be a segment in which the blood smear is too thick. Such segment may be referred to as a "body" within the art. Figure 7A is a schematic illustration of a distribution of red blood cells 70 within a part of the first segment 2522. As can be seen in the example of Fig. 7A, a large number of red blood cells 70 may be present in the first segment 2522. Further, a density of red blood cells 70 present in the first segment 2522 may be high. However, several red blood cells are overlapping, which may prohibit counting and/or differentiation of the red blood cells 70. Put differently, the red blood cells 70 may not be spaced enough apart in the first segment 2522 of the sample 252 illustrated in Fig. 2. The overlap is illustrated in the enlarged portion (represented as a dashed rectangle 700) in Fig. 7A. Here, it can be seen that an areal overlap of a red blood cell 702 is large (i.e., a further red blood cell 704 covers a large portion of an area of the red blood cell 702), and that red blood cell 702 cannot be used as a reference red blood cell. Put differently, the red blood cell 702 may not be an indication of a monolayer in the training sample. Further, no red blood cell 70 in the first segment 2522 may have a central pallor, which may be an indication that the first segment 2522 may be too thick. Put differently, only a few (or even none) of the red blood cells 70 present in the first segment 2522 may be indicative of a monolayer in the sample 252.

A second segment 2524 may be a segment in which the blood smear is too thin. Such segment may be referred to as a "feathered edge" within the art. Figure 7B is a schematic illustration of a distribution of red blood cells 71 within a part of the second segment 2524. As can be seen in the example of Fig. 7B, a small number of red blood cells 71 may be present in the second segment 2524. Further, a density of red blood cells 71 present in the second segment 2524 may be low. However, no red blood cells 71 are overlapping, and they may be counted and/or differentiated from each other. Put differently, the red blood cells 71 may be spaced enough apart in the second segment 2524 of the sample 252 illustrated in Fig. 2. However, no red blood cell in the second segment 2524 may have a central pallor, which may be an indication that the second segment 2524 of the sample 252 may be too thin. This can be seen in the enlarged portion (represented by dashed rectangular 710) in Fig. 7B. As is illustrated in the enlarged portion 710 in the example of Fig. 7B, red blood cell 712 may have no central pallor. An entirety of the red blood cell 712 may appear pale (pale at least compared to the red blood cell 702 of the first segment 2522 illustrated in Fig. 7A). Thus, a large (or even an entire) portion of the red blood cells 71 in the second segment 2524 may be pale. Put differently, even though the red blood cells 71 may be in a single layer, only a few (or even none) of the red blood cells 71 present in the second segment 2524 of the sample 252 may be used as reference red blood cells due to their lack of central pallor. Thus, the second segment 2524 may not be suitable as a monolayer in the sample 252.

A third segment 2526 may be a segment in which the blood smear exhibits monolayer properties. Such segment may simply be referred to as a "monolayer" within the art. Figure 7C is a schematic illustration of a distribution of red blood cells 72 within a part of the third segment 2526. As can be seen in the example of Fig. 7C, a large number of red blood cells 72 may be present in the third segment 2526. Further, a density of red blood cells 72 present in the third segment 2526 may be high. However, the density of red blood cells 72 in the third segment 2526 may be lower than the density of red blood cells 70 in the first segment 2522. As is illustrated in the example of Fig. 7C, only a small number of red blood cells 72 may be overlapping and/or only overlapping to a small degree. The red blood cells 72 in the third segment 2526 may therefore be counted and/or differentiated from neighboring red blood cells 72. Put differently, the red blood cells 72 may be spaced enough apart in the third segment 2526 of the sample 252 illustrated in Fig. 2. Further, the red blood cells 72 in the third segment 2526 may have a central pallor, which may be an indication that the third segment 2526 may be suitable as a monolayer in the sample 252. The overlap and the central pallor may be seen in the enlarged portion (represented by rectangle 720) in Fig. 7C. In the enlarged portion, a small overlap of a first red blood cell 722 and a second red blood cell 724 may be seen. Further, both red blood cells 722, 724 may have a central pallor. The first red blood cell 722 may have a small central pallor that may be visible as a paler central region 7220 compared to the outer region 7222. The second red blood cell 724 may have a larger central pallor (compared to the first red blood cell 7222) that may be visible as a paler central region 7240 compared to the outer region 7242. Put differently, the red blood cells 72 in the third segment 2526 may be in a single layer, and a large number (or even all) of the red blood cells 72 present in the third segment 2526 may be used as reference red blood cells due to the low areal overlap between neighboring red blood cells 72 and/or the presence of a central pallor.

Figure 1 is a block scheme of a method 10 for training a machine learning model to determine a monolayer candidate position in a sample. The method 10 of Fig. 1 may be a computer-implemented method. As is illustrated in Fig. 1, the method 10 comprises acquiring S100 a training set of images of a training sample. Images of the training set depict a respective portion of the training sample. Each image of the training set may depict a portion of the training sample. The images of the training set of images may depict a plurality of portions of the training sample. Two or more portions depicted in two or more respective images of the training set of images may be overlapping portions or non-overlapping portions. Two neighboring portions depicted in two or more respective images of the training set of images may be overlapping portions or non-overlapping portions. Two portions depicted in two or more respective images of the training set of images may be partly overlapping portions. Preferably, the images of the training set of images depict portions of the training sample in which a monolayer may be expected.

As is further illustrated in the Fig. 1, the method 10 further comprises acquiring S102, for each image of the training set, a number of reference red blood cells depicted in at least a part of the image. The at least a part of the image corresponds to a part of the training sample. The acquired number of reference red blood cells depicted in at least part of the image may be determined from the image. For instance, the number of reference red blood cells depicted in at least a part of the image may be determined by manual inspection of the image. The manual inspection may be performed by a clinical expert trained to evaluated blood smears. Alternatively, or additionally, the number of reference red blood cells depicted in at least a part of the image may be determined automatically. For instance, the number may be determined using one or more object detection algorithms capable of counting reference red blood cells. Non-limiting examples of such object detection algorithms are conventional image processing or object detection algorithms, artificial intelligence, machine learning, etc. The reference red blood cells may be red blood cells fulfilling one or more criteria for red blood cells that are suitable as indicators of a monolayer in the training sample. For instance, such criteria may be that red blood cells of the reference red blood cells are spaced far enough apart for them to be counted and differentiated. To that end, each red blood cell of the reference red blood cells may have an areal overlap with neighboring objects of 10 % or lower, preferably 5 % or lower, more preferably 0 %. The neighboring objects may be one or more of red blood cells, white blood cells, platelets, damaged cells (i.e., smudge cells), and artifacts (e.g., dirt, residues, etc.). For example, 10 % or less of an area of each red blood cell of the reference red blood cells may overlap with neighboring red blood cells. Preferably, 5 % or less of an area of each red blood cell of the reference red blood cells may overlap with neighboring red blood cells. More preferably, 0 % of an area of each red blood cell of the reference red blood cells may overlap with neighboring red blood cells. Accordingly, the reference blood cells may be red blood cells that to only a small degree (or not at all) are overlapped by neighboring objects (e.g., other red blood cells in the training sample). Put differently, the reference red blood cells may be red blood cells that are spaced far enough apart for them to be counted and/or differentiated. As discussed above, such characteristics may be indicative of a monolayer in samples (e.g., the training sample). Further, each red blood cell of the reference red blood cells may have a central pallor. A central pallor may be a lighter-colored portion in a center of a red blood cell visible when viewed by a microscope (or other suitable imaging apparatus). A red blood cell may have a central pallor due to its shape. Put differently, the red blood cell may have a thinner central region compared to outer regions of the red blood cell. This thinner central region may be visible as a more lightly colored region compared to neighboring portions (e.g., the outer regions) of that red blood cell. Red blood cells having no central pallor may be indicative of a portion of the training sample which is too thin and/or too thick. Thus, red blood cells having a central pallor may be a characteristic associated with a monolayer in the training sample. The central pallor may occupy at least 5 % of the red blood cell. Put differently, a central pallor may occupy at least 5 % of an area of a reference red blood cell. A central pallor may occupy 95 % or less of the red blood cell. Put differently, a central pallor may occupy 95 % or less of an area of a reference red blood cell.

As is further illustrated in the Fig. 1, the method 10 further comprises determining S104, for each image of the training set, a monolayer parameter for the portion of the training sample depicted in the image based on the acquired number of reference red blood cells. The monolayer parameter for the portion of the training sample may be determined from the image using an image processing algorithm. For instance, the monolayer parameter may be determined from the image using an object-detection algorithm. Alternatively, or additionally, the monolayer parameter may be determined using a separate machine learning model trained to determine monolayer parameters for portions of samples using images depicting portions of samples. The monolayer parameter may be proportional to the acquired number of reference red blood cells. The monolayer parameter may be the acquired number of reference red blood cells. The monolayer parameter is a parameter indicating to what degree the portion of the training sample at the monolayer candidate position exhibits properties associated with a monolayer. For instance, the monolayer parameter may indicate to what degree the reference red blood cells in the portion of the training sample are spread out in a single layer. Since the reference red blood cells may be suitable as indicators of a monolayer in the training sample, the number of reference red blood cells in the at least a part of the image may be indicative of how suitable the portion depicted in the image is as a monolayer in the training sample. Put differently, the higher the number of reference cells, the more suitable the depicted portion of the training sample may be as a monolayer. In case the part of the image for which the number of reference cells is acquired is similarly (or even identically) sized for different images of the training set of images, the monolayer parameter may be proportional to the acquired number of reference red blood cells.

The method 10 may further comprise, for each image of the training set, acquiring S110 a size of the part of the image for which the number of reference cells is acquired. The size may be a one-dimensional or a two-dimensional size. The one-dimensional size may be a length. The two-dimensional size may be an area. The size may be a physical size in a suitable unit (e.g., mm or mm²) or a size in the image (e.g., a number of pixels). The size of the part of the image may be determined from the image. For instance, the size of the part of the image may be determined by counting a number of pixels in the part of the image. The number of pixels in the part of the image may be converted to a physical size via a predetermined conversion factor. Such conversion factor may be determined during a calibration of the microscope used to capture the images of the training set of images. Further, the size of the part of the image may be predetermined. For instance, the microscope used to capture the images of the training set of images may have a known magnification from which the size of the part of the image may be determined. The size of the part may be similar, or even identical, for each image of the training set of images. The size of the part may vary between images of the training set of images. Determining S104 the monolayer parameter for the portion of the training sample depicted in the image may be further based on the acquired size of the part of the image for which the number of reference cells is acquired. For instance, the monolayer parameter may be indicative of a density of reference cells in the part of the image for which the number of reference cells is acquired. Accordingly, by taking the density of reference cells into account, the monolayer parameter may, more or less, be independent of the size of the part of the image for which the number of reference cells is acquired. Put differently, in case the size of the part of the image for which the number of reference red blood cells is acquired varies, it may be beneficial (though not required) to determine the monolayer parameter further based on the size of the part of the image for which the number of reference cells is acquired. Likewise, even in case the size of the part of the image is similar (or identical), the monolayer parameter may be determined further based on the size of the part of the image for which the number of reference red blood cells is acquired.

As is illustrated in the Fig. 1, the method 10 further comprises acquiring S106 a position of the portion depicted in the image of the training set having a monolayer parameter fulfilling a monolayer candidate criterium. The monolayer candidate criterium may depend on how the monolayer parameter is determined. For instance, the monolayer candidate criterium may correspond to a largest number of reference red blood cells. Put differently, the portion having a monolayer parameter corresponding to a largest number of reference red blood cells may be the portion for which the position is acquired. As a further example, the monolayer candidate criterium may correspond to a highest density of reference red blood cells. Put differently, the portion having a monolayer parameter corresponding to a highest density of reference red blood cells may be the portion for which the position is acquired. The acquired position may be a position relative to a microscope slide on which the training sample is present. The acquired position may be a position relative to an initial position. The acquired position may be a one-dimensional or two-dimensional position. The acquired position may be a position along a direction in which blood is substantially dispersed when preparing the sample (i.e., the blood smear). Typically, the blood smear is prepared along a longitudinal direction of the microscope slide. Thus, the acquired position may be a position along the longitudinal direction of the microscope slide. The acquired position may be determined from the image which depict the portion. For instance, the image may depict one or more references from which the position of the portion may be determined. Further, the acquired position may be determined by comparing the image depicting the portion with an image depicting two or more portions of the training sample. Preferably, such image may depict all portions depicted in the images of the training set of images. Alternatively, or additionally, the position may be acquired from a sample holder configured to move the training sample. Such a sample holder may comprise one or more motorized stages (or motors) configured to move the training sample, and the position at which an image of the training set of images is captured may be retrieved from the motorized stages. Positions of the portions depicted in the images of the training set of images may be determined in the manner discussed above, and the position of the portion depicted in the image of the training set having a monolayer parameter fulfilling a monolayer candidate criterium may be acquired from these determined positions.

As is illustrated in the Fig. 1, the method 10 further comprises training S108 the machine learning model to determine a monolayer candidate position in a sample using a training input comprising the training set of images and a ground truth comprising the acquired position. The images of the training set of images may be used as features, and the acquired position of the portion depicted in the image of the training set having a monolayer parameter fulfilling a monolayer candidate criterium may be used as a label. Each image of the training set of images may be labelled with the acquired position of the portion depicted in the image of the training set having a monolayer parameter fulfilling a monolayer candidate criterium. Put differently, each image of the training set may be used as a feature for training the machine learning model, and the acquired position of the portion depicted in the image of the training set having a monolayer parameter fulfilling a monolayer candidate criterium may be used as a label for training the machine learning model.

As is illustrated in Fig. 1, the method 10 may further comprise, for each image of the training set, acquiring S114 a position of the portion depicted in the image. The training input may further comprise the acquired positions of the portions depicted in the images of the training set. For instance, the ground truth may be a difference between the acquired position of the portion depicted in the image of the training set having a monolayer parameter fulfilling a monolayer candidate criterium and the acquired positions of the portions depicted in the images of the training set. In such case, the images of the training set of images may be used as features, and the difference between the positions of the portions depicted in the images of the training set of images and the acquired position of the portion depicted in the image of the training set having a monolayer parameter fulfilling a monolayer candidate criterium may be used as labels. Put differently, each image of the training set may be used as a feature labelled with a respective position of the portion depicted in the image relative to the portion having a monolayer parameter fulfilling a monolayer candidate criterium. Put differently, the machine learning model may be trained to determine a relative monolayer candidate position. In case the machine learning model is trained using acquired positions for the images of the training set, it may be beneficial in case the machine learning model is a recurrent neural network (RNN). An RNN may be designed to process sequences of data (e.g., a sequence of images and associated positions), and to that end may be capable of maintaining a memory of previous inputs.

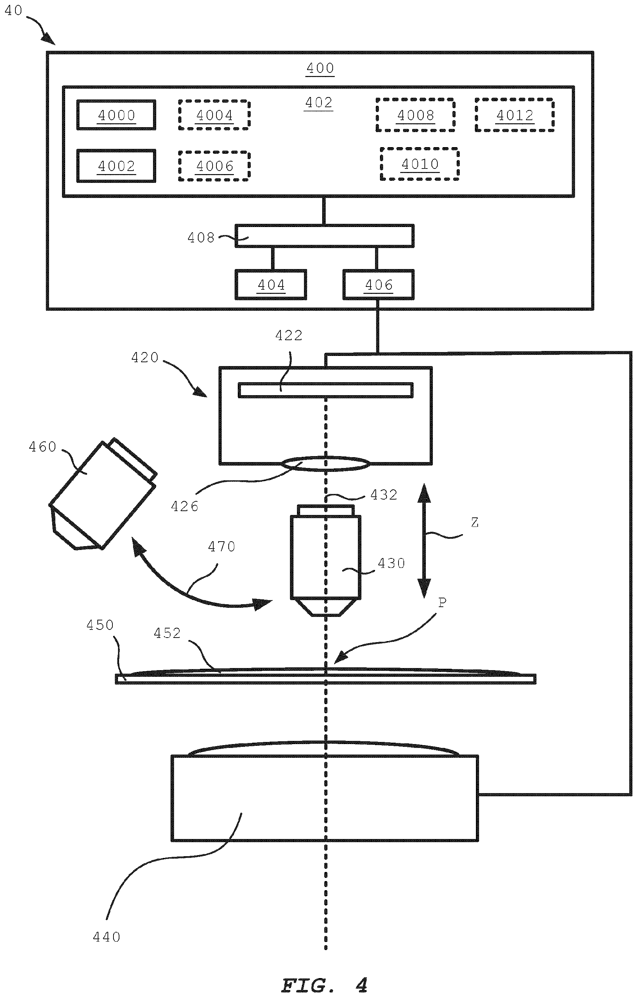

As is illustrated in Fig. 1, the method 10 may further comprise acquiring S112 an overview image of the training sample. The overview image may depict at least two portions depicted in at least two respective images of the training set. Preferably, the overview image of the training sample may depict a majority, or even all, portions depicted in the images of the training set. A resolution of the overview image may be lower than a resolution of at least one image of the training set of images. The resolution of the overview image may be lower than resolutions of a majority of the images of the training set of images. The resolution of the overview image may be lower than resolutions of all images of the training set of images. For instance, one or more (preferably a majority or all) images of the training set of images may be captured using a microscope objective (e.g., further microscope objective 430 illustrated in Fig. 4) having a higher magnification than a further microscope objective (e.g., further microscope objective 460 illustrated in Fig. 4) used to capture the overview image. The training input may further comprise the overview image. Accordingly, the machine learning model may be trained on additional information of the training sample. It has been found that training the machine learning model further using an overview image greatly improves the trained machine learning model's capability to determine a monolayer candidate position. This may, e.g., be due to the overview image providing information associated with more than one portion of the training sample, whereby the machine learning model may be trained taking that information into account.

The ground truth may further comprise the monolayer parameter for the portion depicted in the image of the training set having a monolayer parameter fulfilling a monolayer candidate criterium. The machine learning model may be further trained to determine a monolayer parameter for a portion of the sample at the monolayer candidate position in the sample. The monolayer parameter fulfilling the monolayer candidate criterium may be used as a further label during training. Accordingly, the trained machine learning model may thereby be capable of generating a monolayer parameter which, in turn, may be used to evaluate to what degree a portion of a sample at the monolayer candidate position exhibits features associated with a monolayer.

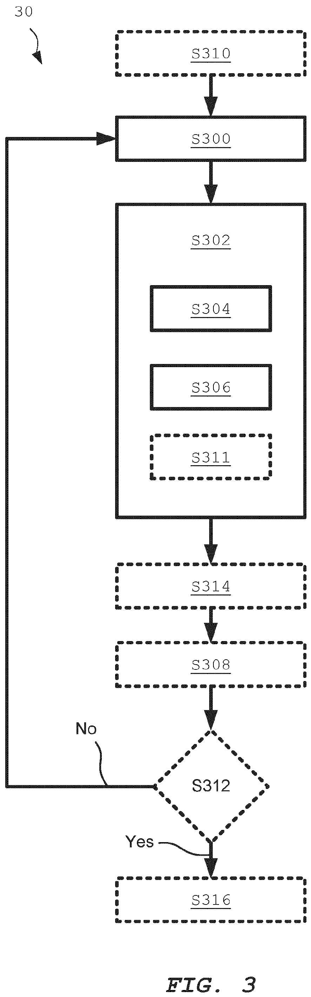

Figure 3 is a block scheme of a method 30 for determining a monolayer candidate position in a sample using a machine learning model trained according to the method 10 described in connection with Fig. 1. The method 30 of Fig. 3 may be a computer-implemented method. The method 30 of Fig. 3 may be performed using a microscopy system 40 schematically illustrated in Fig. 4. As is illustrated in Fig. 3, the method 30 comprises (a) acquiring S300 an image of a portion of the sample at an imaging position in the sample. The method 30 further comprises (b) determining S302 a monolayer candidate position by inputting S304 the image into the trained machine learning model, and receiving S306 the monolayer candidate position from the trained machine learning model. In case the machine learning model has been trained using an overview image of the training sample, the method 30 may, as is illustrated in Fig. 3, further comprise, acquiring S310 an overview image of the sample, and determining S302 a monolayer candidate position in a sample may further comprise inputting S311 the overview image into the trained machine learning model. As is illustrated in Fig. 3, the method 30 may further comprise (c) updating S308 the imaging position to the monolayer candidate position. Updating S308 the imaging position to the monolayer candidate position may comprise moving the sample such that a portion of the sample at the monolayer candidate position may be imaged by the microscope. Steps (a), (b), and (c) may be repeated until a stop condition is fulfilled. To that end, the method 30 may, as is illustrated in Fig. 3, further comprise (d) checking S312 if the stop condition is fulfilled. Step (d) may be repeated with steps (a), (b), and (c). In case the machine learning model has been trained using positions of portions depicted in the images of the training set of images, determining S302 the monolayer candidate position may further comprise inputting the imaging position into the trained machine learning model. It may be beneficial in case the trained machine learning model is an RNN, since such networks may maintain a memory of previous inputs (e.g., imaging positions for previous repetitions) which may enhance the trained machine learning model ability to determine the monolayer candidate position. The stop condition may be one or more of: a monolayer parameter of the portion of the sample at the imaging position exceeding a monolayer parameter threshold; and a difference between two consecutively determined monolayer candidate positions being smaller than a monolayer candidate position threshold. As is illustrated in Fig. 3, the method 30 may further comprise determining S314 a monolayer parameter for the portion of the sample at the imaging position based on the acquired image. The monolayer parameter may be determined in a similar (or even identical) manner as described in connection with Fig. 1 and Fig. 2. In case the trained machine learning model is trained to determine a monolayer parameter, that monolayer parameter may be used. Alternatively, or additionally, a separate machine learning model trained to determine monolayer parameters for portions depicted in images may be used. Thus, in case the monolayer parameter determined for the portion of the sample at the imaging position exceeds the monolayer parameter threshold, the method 30 may stop repeating, and the determined monolayer candidate position may be output as a monolayer position. Alternatively, or additionally, in case monolayer candidate positions consecutively determined by the trained machine learning model are close enough (i.e., closer than the monolayer candidate position threshold), the method 30 may stop repeating, and output one of the consecutively determined monolayer candidate positions (or an average of the consecutively determined monolayer candidate positions) as a monolayer position. Put differently, by repeating the method 30 of Fig. 3 until the stop condition is fulfilled, a monolayer position in the sample may be determined. The monolayer position in the sample may be a position of a portion that, according to the trained machine learning model, exhibits one or more features that are indicative of a monolayer in the sample. Thus, the method 30 may, as is illustrated in the example of Fig. 3, further comprise upon finding that the stop condition is fulfilled outputting S316 the determined monolayer candidate position as the monolayer position. Further, repeating steps (a), (b), (c), and, if present, (d) may be stopped after a predetermined number of iterations (or after a predetermined amount of time) even if the stop condition is not fulfilled. In such case, the determined monolayer candidate position of the portion of the sample having a monolayer parameter which is closest to exceeding the monolayer parameter threshold may be output as a monolayer position.

Subsequent to finding the monolayer position in the sample, a size of a monolayer at the monolayer position may be determined. The size may have a longitudinal size and/or a transversal size. The monolayer position may be in a position in the monolayer. The monolayer position may be a position at a center of the monolayer. The monolayer position may be a position along an edge of the monolayer. The longitudinal size may a size of the monolayer along the longitudinal direction of the microscope slide. The transversal size may a size of the monolayer along the transversal direction of the microscope slide. The longitudinal size and/or the transversal size may be predetermined. For instance, the longitudinal size may be between 1 mm and 5 mm (e.g., 3.5 mm). Further, the transversal size may be between 5 mm and 25 mm (e.g., between 10 mm - 15 mm). The size of the monolayer may be dynamical. For instance, monolayer parameters for portions of the sample in the vicinity (e.g., up to 10 mm) of the monolayer position may be determined. The monolayer may be expanded to comprise portions of the sample in the vicinity of the monolayer position having monolayer parameters exceeding an expansion threshold. The expansion threshold may be predetermined and/or relative to an optimum monolayer parameter in the vicinity of the monolayer position. The optimum monolayer parameter may be a monolayer parameter of a portion in the vicinity of the monolayer position corresponding to a largest number and/or highest density of reference red blood cells of the portions in the vicinity of the monolayer position. Alternatively, or additionally, the monolayer may be expanded to comprise portions of the sample in the vicinity of the monolayer position such that a monolayer parameter of the expanded monolayer exceeds the expansion threshold. For instance, the monolayer may be expanded to comprise portions of the sample in the vicinity of the monolayer position such that a monolayer parameter of the expanded monolayer is optimized (e.g., corresponding to a largest number and/or highest density of reference red blood cells).

Figure 4 is a schematic illustration of a microscopy system 40 suitable for acquiring images that may be used to determine a monolayer candidate position (or monolayer position) in a sample 452. The microscopy system comprises an image sensor 422, a microscope objective 430, and circuitry 400. As is illustrated in the example of Fig. 4, the microscopy system 40 may further comprise one or more of a light source 440, a sample holder 450, and a further microscope objective 460.

As is illustrated in the example of Fig. 4, the image sensor 422 may form part of a camera 420. The camera 420 may configured to capture images of the sample 452 using the image sensor 422. Thus, the camera 420 may comprise the image sensor 422. The image sensor 422 may comprise a charge-coupled device (CCD) sensor and/or a complementary metal-oxide-semiconductor (CMOS) sensor. Images captured by the image sensor 422 may be digital images. The image sensor 422 may be capable of capturing color images. To that end, the at least one image sensor 422 may comprise a color filter (e.g., a Bayer filter) to allow the image sensor 422 to capture color information of light impinging on the image sensor 422. The image sensor 422 may be capable of capturing grayscale images, and, in such case, the image sensor 422 may not comprise a color filter. However, it is to be understood that the image sensor 422 may be capable of capturing grayscale images while still comprising a color filter. As is illustrated in the example of Fig. 4, the image sensor 422 may communicate with the circuitry 400 via a communication interface 406 of the circuitry 400. However, it is to be understood that the image sensor 422 may communicate with the circuitry 400 via the data bus 408.

The microscope objective 430 is configured to image a sample 452 onto the image sensor 422. The microscope objective 430 may be configured to image the sample 452 onto the image sensor 422 when the microscope objective 430 is in an imaging state. For example, in the imaging state, the microscope objective 430 may be positioned such that an object plane of the microscope objective 430 coincides with the sample 452 and an image plane of the microscope objective 430 coincides with the image sensor 422. The microscope objective 430 may have a magnification. The magnification may be higher than 10x. For instance, the magnification may be 40x or 100x. The magnification of the microscope objective 430 may be higher than a further magnification of the further microscope objective 460. The microscope objective 430 may be movable in to and out of the imaging state. The movement is represented by arrow 470 in Fig. 4. In the example of Fig. 4, the microscope objective 430 is in the imaging state. The further microscope objective 460 may be movable in to and out of the imaging state. For example, in the imaging state, the further microscope objective 460 may be positioned such that an object plane of the further microscope objective 460 coincides with the sample 452 and an image plane of the further microscope objective 460 coincides with the image sensor 422. The movement is represented by arrow 470 in Fig. 4. For instance, the microscope objective 430 and the further microscope objective 460 may be mounted on a turret (not illustrated). The turret may be motorized (i.e., movable using a motor or stage) and/or manual. In the example of Fig. 4, the further microscope objective 460 is not in the imaging state. Even though not illustrated in the example of Fig. 4, it is to be understood that the camera 420 may comprise further components, e.g., one or more of an aperture, a shutter, a lens, a window, color filters, etc. For instance, the camera 420 may, as is illustrated in Fig. 4, further comprise a relay lens 426. The relay lens 426 may be aligned with the microscope objective 430. The microscope objective 430 may be movable along a direction Z substantially parallel to the optical axis 132 of the microscope objective 430. Put differently, the microscope objective 430 may be movable in a focusing direction. The microscope objective 430 may be movable along the direction Z by being coupled to a manual and/or motorized stage (not illustrated). The microscope objective 430 and/or the sample holder 450 may be movable such that a focused image of the sample 452 may be captured by the at least one image sensor 422. A position of the microscope objective 430 along the direction Z may be controlled by the circuitry 400. For example, the circuitry 400 may be configured to execute a focus function 4012 configured to adjust a position of the microscope objective 430 along the direction Z. The focus function 4012 may be configured to automatically adjust the position of the microscope objective 430 along the direction Z. Put differently, the focus function 4012 may be an autofocus function. Even though it is not illustrated in the example of Fig. 4, the focus function 4012 may control the position of the microscope objective 430 along the direction Z by communicating via the communication interface 406. However, it is to be understood that the focus function 4012 may be configured to control that position by communicating via the data bus 408. It is to be understood that the above description of the microscope objective 430 may also apply to the further microscope objective 460 in case it is in the imaging state.

The light source 440 may be configured to illuminate the sample 452. The light source 440 may be any type of light source suitable for microscopy. The light source 440 may, as is illustrated in the example of Fig. 4, be arranged for transillumination. It is, however, to be understood that this is an example only, and other light sources may be used as well. For instance, EPI illumination and/or dark-field illumination may be used. Further, it is envisioned that a combination of one or more of the illumination techniques may be used to illuminate the sample 452.

The sample holder 450 may be configured to hold the sample 452. The sample holder 450 may be movable in a plane having a normal parallel to an optical axis 432 of the microscope objective 430. The sample holder 450 may comprise motorized stages or motors (not illustrated) configured to move the sample 452 along a plane having a normal substantially parallel to the optical axis 432 of the microscope objective 430. The sample holder 450 may be further configured to move the sample 452 to imaging positions. At an imaging position, a portion of the sample 452 may be imaged onto the image sensor 422 by the microscope objective 430. The sample 452 may be prepared on a microscope slide, and the sample holder 450 may be configured to hold the sample 452 by holding the microscope slide.

The circuitry 400 is configured to execute an image acquisition function 4000, and a monolayer candidate position determination function 4002. As is illustrated in the example of Fig. 4, the circuitry 400 may be further configured to execute one or more of an overview image acquisition function 4006, an imaging position update function 4004, a monolayer parameter determination function 4008, and a monolayer candidate position comparison function 4010.

The image acquisition function 4000 is configured to acquire, using the image sensor 422, an image of a portion of the sample 452 at a current imaging position in the sample 452. The image acquisition function 4000 may be further configured to control the light source 440 to illuminate the sample 452 when the image sensor 422 acquires the image of the portion of the sample 452 at the current imaging position. The image of the portion of the sample 452 may be captured using the microscope objective 430 and the image sensor 422. The image acquisition function 4000 may be configured to move the microscope objective 430 in to the imaging state. The image acquisition function 4000 may be configured to move the further microscope objective 460 out of the imaging state. Alternatively, or additionally, the movement of the microscope objective 430 and/or the further microscope objective 460 may be performed manually.

The monolayer candidate position determination function 4002 is configured to determine a monolayer candidate position by inputting the acquired image into a machine learning model trained according to the method 10 of Fig. 1, and receiving the monolayer candidate position from the trained machine learning model. In case the machine learning model has been trained using an overview of the training sample 452, the circuitry 400 may be further configured to execute the overview image acquisition function 4006. The overview image acquisition function 4006 may be configured to acquire an overview image of the sample 452. The overview image of the sample 452 may depict portions of the sample 452 that may comprise a monolayer. The overview image of the sample 452 may be captured using the further microscope objective 460 and the image sensor 422. Thus, a resolution of the overview image may be lower than a resolution of at least one image of the training set of images. The overview image acquisition function 4006 may be configured to move the further microscope objective 460 in to the imaging state. The overview image acquisition function 4006 may be configured to move the microscope objective 430 out of the imaging state. Alternatively, or additionally, the movement of the microscope objective 430 and/or the further microscope objective 460 may be performed manually. The monolayer candidate position determination function 4002 may be further configured to input the overview image into the trained machine learning model.

The imaging position update function 4004 may be configured to update, using the sample holder 450, the imaging position to the monolayer candidate position. Put differently, after updating the imaging the current imaging position may be the monolayer candidate position determined by the trained machine learning model based on the image captured at the former imaging position. The circuitry 400 may be further configured to repeatedly execute the image acquisition function 4000, the monolayer candidate position determination function 4002, and the image position update function 4004 until a stop condition is fulfilled. Put differently, the circuitry 400 may be configured to determine a monolayer position in the sample 452. The stop condition may be one or more of: a monolayer parameter of the portion of the sample 452 at the imaging position exceeding a monolayer parameter threshold; and a difference between two consecutively determined monolayer candidate positions being smaller than a monolayer candidate position threshold. To that end, the circuitry 400 may be configured to execute the monolayer parameter determination function 4008. The monolayer parameter determination function 4008 may be configured to determine a monolayer parameter for the portion of the sample 452 at the current imaging position in the sample 452 based on the acquired image. Further, the circuitry 400 may be configured to execute the monolayer candidate position comparison function 4010. The monolayer candidate position comparison function 4010 may be configured to determine a difference between two consecutively determined monolayer candidate positions.

Even though the circuitry 400 is illustrated as a separate entity in Fig. 4, it is to be understood that the circuitry 400 may form part of an electronic device. The electronic device may, e.g., be a computer, a server, a smartphone, etc. The electronic device may be a local electronic device (i.e., arranged in proximity of the other parts of the microscope system) or a remote electronic device. Non-limiting examples of a remote electronic device may be a server, a cloud server, a remote computer, a remote smartphone, etc. It is further to be understood that the functionality of the circuitry 400 may be distributed over more than one electronic device. The electronic device may comprise further components, for example input devices (mouse, keyboard, touchscreen, etc.) and/or a display. As is illustrated in the example of Fig. 4, the circuitry 400 may comprise one or more of a memory 402, a processing unit 404, a communication interface 406, and a data bus 408. The memory 402, the processing unit 404, and the communication interface 406 may communicate (e.g., exchange data) via the data bus 408. The processing unit 404 may comprise a central processing unit (CPU) and/or a graphical processing unit (GPU). The communication interface 406 may be configured to communicate with external devices. For example, the communication interface 406 may be configured to communicate with servers, computers, external peripherals (e.g., external storage), etc. The external devices may be local devices or remote devices (e.g., a cloud server). The communication interface 406 may be configured to communicate with the external devices via an external network (e.g., a local-area network, the internet, etc.). The communication interface 406 may comprise a transceiver. The communication interface 406 may be configured for wireless and/or wired communication. Suitable technologies for wireless communication are known to the skilled person. Some non-limiting examples comprise Wi-Fi and Near-Field Communication (NFC). Suitable technologies for wired communication are known to the skilled person. Some non-limiting examples comprise USB, Ethernet, and Firewire.

The memory 402 may be a non-transitory computer-readable storage medium. The memory 402 may be a randomaccess memory. The memory 402 may be a non-volatile memory. As is illustrated in the example of Fig. 4, the memory 402 may store program code portions 4000, 4002, 4004, 4006, 4008, 4010, 4012 corresponding to one or more functions. The program code portions 4000, 4002, 4004, 4006, 4008, 4010, 4012 may be executable by the processing unit 404, which thereby performs the functions. Hence, when it is referred to that the circuitry 400 is configured to execute a specific function, the processing unit 404 may execute program code portions 4000, 4002, 4004, 4006, 4008, 4010, 4012 corresponding to the specific function which may be stored on the memory 402. However, it is to be understood that one or more functions of the circuitry 400 may be hardware implemented and/or implemented in a specific integrated circuit. For example, one or more functions may be implemented using field-programmable gate arrays (FPGAs). Hence, one or more functions of the circuitry 400 may be implemented in hardware or software, or as a combination of the two.

It is to be understood that the microscopy system 40 of Fig. 4 may perform the method 30 of Fig. 3. Put differently, the circuitry 400 of Fig. 4 may be configured to perform the method 30 described in connection with Fig. 3. Hence, the above-mentioned features of the method of Fig. 3, when applicable, apply to the microscopy system 40 of Fig. 4 as well. In order to avoid undue repetition, reference is made to the above.

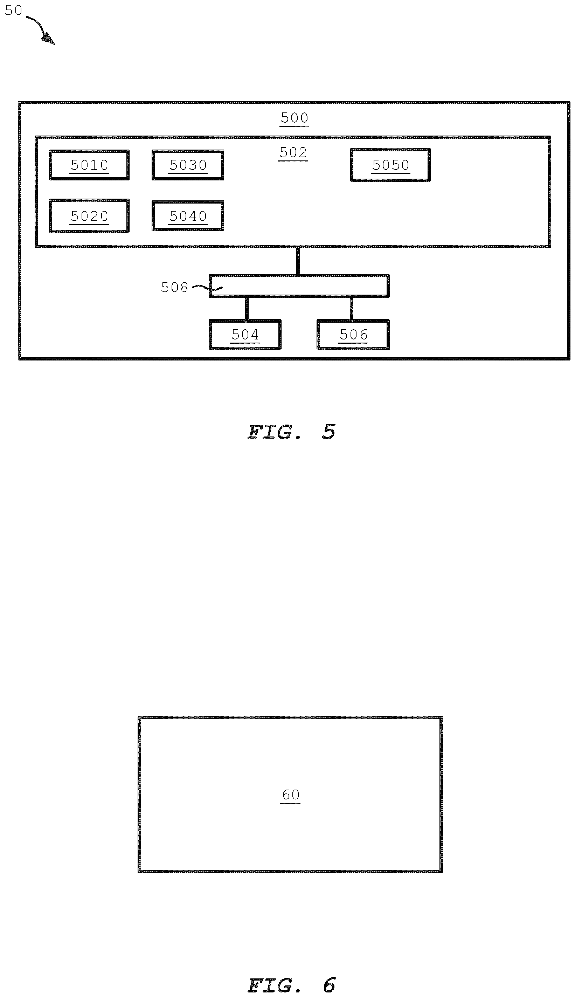

Figure 5 is a schematic illustration of a device 50 for training a machine learning model to determine a monolayer candidate position in a sample. The device 50 may be configured to implement the method 10 discussed in connection with Fig. 1. The device 50 may be a computing device. For instance, the device may be one or more of a computer, a server, a cloud server, etc. As is illustrated in Fig. 5, the device 50 comprises circuitry 500 configured to execute a training set acquisition function 5010. The circuitry 500 of the device 50 may be similar to the circuitry 400 of the microscopy system 40 illustrated in Fig. 4, and the description of the circuitry 400 of the microscopy system 40 applies mutatis mutandis to the circuitry 500 of the device 50. To avoid undue repetition, reference is made to the above. For instance, the circuitry 500 of the device 50 schematically illustrated in Fig. 5 may comprise one or more of a memory 502, a processing unit 504, a communication interface 506, and a data bus 508. These components 502, 504, 506, 508 may function similar, or even identical to, the corresponding components of the circuitry 400 of the microscopy system 40 of Fig. 4. The training set acquisition function 5010 is configured to acquire a training set of images of a training sample. Images of the training set depict a respective portion of the training sample. The circuitry 500 is further configured to execute, for each image of the training set, a reference red blood cell number acquisition 5020 function configured to acquire a number of reference red blood cells depicted in at least a part of the image. The circuitry 500 is further configured to execute, for each image of the training set, a monolayer parameter determination function 5030 configured to determine a monolayer parameter for the portion of the training sample depicted in the image based on the acquired number of reference red blood cells. The circuitry 500 is further configured to execute a position acquisition function 5040 configured to acquire a position of the portion depicted in the image of the training set having a monolayer parameter fulfilling a monolayer candidate criterium. The circuitry 500 is further configured to execute a training function 5050 configured to train the machine learning model to determine a monolayer candidate position in a sample using a training input comprising the training set of images and a ground truth comprising the acquired position. The above-mentioned features of the training method 10 described in connection with Fig. 1, when applicable, apply to device 50 of Fig. 5 as well. For instance, the circuitry 500 may be further configured to execute one or more functions not depicted in Fig. 5 to perform additional steps of the method 10 of Fig. 1. In order to avoid undue repetition, reference is made to the above.

Figure 6 is a schematic illustration of a non-transitory computer-readable storage medium 60. The non-transitory computer-readable storage medium 60 comprises program code portions that, when executed by a device having processing capabilities, performs the method 10, 30 of Fig. 1 or Fig. 3.

A skilled person would be aware of machine learning, and in particular as to how a machine learning model may be trained and/or how a trained machine learning model may be used. However, in brief, the machine learning model may be a type of supervised machine learning model, for example a network such as EfficientNet, TinyNet, and/or ResNet. The machine learning model may be a transformer-based network such as SwinIR. The machine learning model may be a convolutional neural network. The machine learning model may be trained to predict a desired output using example input training data and a ground truth, i.e., the "correct" or "true" output. Put differently, the ground truth may be used as a label for the input training data. The input training data may comprise data pertaining to different outcomes, and each input training data may thereby be associated with a ground truth associated with that particular input training data. Hence, each input training data may be labelled with an associated ground truth **(i.e.,** "correct" or "true" output). The machine learning model may comprise a plurality of layers of neurons, and each neuron may represent a mathematical operation which is applied to the input training data. Typically, the machine learning model comprises an input layer or multiple input layers, one or more hidden layers, and an output layer. The first layer may be referred to as the input layer. The output of each layer (except the output layer) in the machine learning model may be fed to a subsequent layer, which in turn produces a new output. The new output may be fed to a further subsequent layer. The output of the machine learning model may be an output of the output layer. The process may be repeated for all layers in the machine learning model. Typically, each layer further comprises an activation function. The activation function may further define the output of a neuron of the layer. For example, the activation function may ensure that the output from a layer is not too large or too small (e.g., tending towards positive or negative infinity). Further, the activation function may introduce non-linearity into the machine learning model. During the training process, weights and/or biases associated with the neurons of the layers may be adjusted until the machine learning model produces predictions for the input training data that reflect the ground truth. Each neuron may be configured to multiply the input to the neuron with a weight associated with that neuron. Each neuron may be further configured to add a bias associated with that neuron to the input. Put differently, an output from a neuron may be a sum of the bias associated with the neuron and a product of the weight associated with the neuron and the input. The weights and biases may be adjusted in a recursive process and/or an iterative process. This may be known as backpropagation within the art. A convolutional neural network (CNN) may be a type of neural network comprising one or more layers that represents a convolution operation. A recurrent neural network (RNN) may be a type of neural network designed for processing sequences of data. An RNN may be able to retain a memory of previous inputs, which may be useful for sequential data analysis. In this context, the input training data comprises images. The images may be digital images. An image may be represented as matrix (or as an array), and each element in the matrix (or array) may represent a corresponding pixel of the image. The value of an element may thereby represent a pixel value and/or color value of the corresponding pixel in the image. Hence, the input to the machine learning model may be numerical (e.g., a matrix or an array) representing images. In this context, the input is a one or more images (i.e., the training set of images or the input image). Thus, the input to the machine learning model may be one or more matrices, or a three-dimensional matrix. It is, however, to be understood that the machine learning model may take further input during training. In this specific case, the machine learning model is trained using a training set of images and a ground truth. The training set of images is acquired in a manner similar to the acquisition of the one or more input images. Put differently, the training sample and the sample (i.e., a sample in which a monolayer position is to be identified) may be imaged in a similar manner. The machine learning model may be trained using the training set of images as input and the ground truth as the desired output. Put differently, the machine learning model may be trained until a difference between an output of the machine learning model and the ground truth is smaller than a threshold. This difference may within the art be described by a loss function. It may be preferred to train the machine learning model until the loss function is minimized. Put differently, the machine learning model may be trained until the difference between the output of the machine learning model and the ground truth is minimized. The training process may be repeated for a plurality of different training samples (e.g., different training samples of the same and/or of different types), which may allow for the machine learning model to determine monolayer candidate positions (or monolayer positions) in a wider range of sample types and/or with higher accuracy.

The person skilled in the art realizes that the present inventive concept by no means is limited to the preferred variants described above. On the contrary, many modifications and variations are possible within the scope of the appended claims.

For example, even though the microscopy system of Fig. 4 is described only in the context of using a trained machine learning model to determine a monolayer (candidate) position, it is to be understood that the microscopy system may be used to capture the images of the training set of images. Thus, the circuitry of the microscopy system of Fig. 4 may be further configured to perform the method of Fig. 1. Further, the microscopy system of Fig. 4 may be suitable to perform additional analysis related to the monolayer in the sample. For instance, the circuitry of the microscopy system of Fig. 4 may be configured to determine the size of the monolayer as discussed in connection with Fig. 3.

Additionally, variations to the disclosed variants can be understood and effected by the skilled person in practicing the claimed invention, from a study of the drawings, the disclosure, and the appended claims.

## Claims

1. A method (10) for training a machine learning model to determine a monolayer candidate position in a sample, the method (10) comprising:
acquiring (S100) a training set of images of a training sample, wherein images of the training set depict a respective portion of the training sample;
for each image of the training set:
acquiring (S102) a number of reference red blood cells depicted in at least a part of the image, and
determining (S104) a monolayer parameter for the portion of the training sample depicted in the image based on the acquired number of reference red blood cells;
acquiring (S106) a position of the portion depicted in the image of the training set having a monolayer parameter fulfilling a monolayer candidate criterium; and
training (S108) the machine learning model to determine a monolayer candidate position in a sample using a training input comprising the training set of images and a ground truth comprising the acquired position.

2. The method (10) according to claim 1, further comprising:
for each image of the training set:
acquiring (S110) a size of the part of the image for which the number of reference cells is acquired, and
wherein determining (S104) the monolayer parameter for the portion of the training sample depicted in the image is further based on the acquired size of the part of the image for which the number of reference cells is acquired.

3. The method (10) according to claim 1 or 2,
wherein each red blood cell of the reference red blood cells has an areal overlap with neighboring objects of 10 % or lower, preferably 5 % or lower.

4. The method (10) according to claim 3, wherein each red blood cell of the reference red blood cells has a central pallor.

5. The method (10) according to claim 4, wherein the central pallor occupies at least 5 % of the red blood cell.

6. The method (10) according to any one of claims 1-5, further comprising:
acquiring (S112) an overview image of the training sample, wherein the overview image depicts at least two portions depicted in at least two respective images of the training set; and
wherein the training input further comprises the overview image.

7. The method (10) according to any one of claims 1-6, wherein the ground truth further comprises the monolayer parameter for the portion depicted in the image of the training set having a monolayer parameter fulfilling a monolayer candidate criterium; and
wherein the machine learning model is further trained to determine a monolayer parameter for a portion of the sample at the monolayer candidate position in the sample.

8. A method (30) for determining a monolayer candidate position in a sample using a machine learning model trained according to the method (10) of any one of claims 1-7, the method (30) comprising:
a. acquiring (S300) an image of a portion of the sample at an imaging position in the sample; and
b. determining (S302) a monolayer candidate position by:
inputting (S304) the image into the trained machine learning model, and
receiving (S306) the monolayer candidate position from the trained machine learning model.

9. The method (30) according to claim 8, further comprising:
c. updating (S308) the imaging position to the monolayer candidate position; and
wherein steps a, b, and c are repeated until a stop condition is fulfilled.

10. The method (30) according to claim 9, wherein the stop condition is one or more of:
a monolayer parameter of the portion of the sample at the imaging position exceeding a monolayer parameter threshold; and
a difference between two consecutively determined monolayer candidate positions being smaller than a monolayer candidate position threshold.

11. A device (50) for training a machine learning model to determine a monolayer candidate position in a sample, the device (50) comprising circuitry (500) configured to execute:
a training set acquisition function (502) configured to acquire a training set of images of a training sample, wherein images of the training set depict a respective portion of the training sample;
for each image of the training set:
a reference red blood cell number acquisition (504) function configured to acquire a number of reference red blood cells depicted in at least a part of the image, and
a monolayer parameter determination function (506) configured to determine a monolayer parameter for the portion of the training sample depicted in the image based on the acquired number of reference red blood cells;
a position acquisition function (508) configured to acquire a position of the portion depicted in the image of the training set having a monolayer parameter fulfilling a monolayer candidate criterium; and
a training function (510) configured to train the machine learning model to determine a monolayer candidate position in a sample using a training input comprising the training set of images and a ground truth comprising the acquired position.

12. A microscopy system (40) comprising:
an image sensor (422);
a microscope objective (430) configured to image a sample (452) onto the image sensor (422); and
circuitry (400) configured to execute:
an image acquisition function (4000) configured to acquire, using the image sensor, an image of a portion of the sample at an imaging position in the sample; and
a monolayer candidate position determination function (4002) configured to determine a monolayer candidate position by:
inputting the image into a machine learning model trained according to any one of claims 1-7, and
receiving the monolayer candidate position from the trained machine learning model.

13. The microscopy system (40) according to claim 12, further comprising:
a sample holder (450) configured to hold the sample (452), wherein the sample holder is movable in a plane having a normal parallel to an optical axis of the microscope objective; and
wherein the circuitry (400) is further configured to execute:
an imaging position update function (4004) configured to update, using the sample holder, the imaging position to the monolayer candidate position; and
wherein the circuitry (400) is further configured to repeatedly execute the image acquisition function (4000), the monolayer candidate position determination function (4002), and the image position update function (4004) until a stop condition is fulfilled.

14. The microscopy system (40) according to claim 13, wherein the stop condition is one or more of:
a monolayer parameter of the portion of the sample at the imaging position exceeding a monolayer parameter threshold; and
a difference between two consecutively determined monolayer candidate positions being smaller than a monolayer candidate position threshold.

15. A non-transitory computer-readable storage medium (60) comprising program code portions that, when executed by a device having processing capabilities, performs the method (10, 30) according to any one of claims 1-10.
